# EUROPÄISCHE PATENTSCHRIFT

(11) **EP 3 110 731 B1**
(45) Veröffentlichungstag und Bekanntmachung des Hinweises auf die Patenterteilung: **11.09.2019**
(21) Anmeldenummer: 15709864.1
(22) Anmeldetag: 27.02.2015
(51) Int. Cl.: B65G 57/00, B65D 71/70

(54) **STAPELVERFAHREN**
STACKING METHOD
PROCÉDÉ D'EMPILAGE

(30) Priorität: 27.02.2014 DE 202014100905 U
(43) Veröffentlichungstag der Anmeldung: 04.01.2017
(73) Patentinhaber: AUTEFA Solutions Germany GmbH, 86316 Friedberg (DE)
(72) Erfinder: KUHN, Rudolf, 86356 Neusäß (DE); KNOBLOCH, Peter, 86368 Gersthofen (DE)
(74) Vertreter: Ernicke, Klaus Stefan
(86) Internationale Anmeldenummer: PCT/EP2015/054111
(87) Internationale Veröffentlichungsnummer: WO 2015/128452

(56) Entgegenhaltungen:
- WO-A2-2008/138556
- DE-A1- 2 063 677
- DE-U1- 29 603 566
- JP-A- 2000 204 900
- US-A- 2 768 756
- US-A- 3 648 857

## Beschreibung

Die Erfindung betrifft ein Stapelverfahren mit den Merkmalen im Oberbegriff des Verfahrensanspruchs 1. Aus der Praxis sind Stapeleinrichtungen bekannt, die als Palettierer ausgebildet sind und Warenlagen in einem Palettenstapel übereinander auf- und abstapeln, wobei die Warenlagen auf scheibenförmigen Zwischenlagen aus Karton stehen und hierdurch von einander getrennt sind. Der Palettierer greift die z.B. von Flaschen gebildeten Warenlagen mit einem Flaschengreifer und setzt sie auf die Palette und die Zwischenlagen um.

Es ist Aufgabe der vorliegenden Erfindung, eine bessere Stapeltechnik aufzuzeigen.

Die Erfindung löst diese Aufgabe mit den Merkmalen des Verfahrensanspruchs 1.

Die beanspruchte Stapeltechnik, d.h. die Stapeleinrichtung und das Stapelverfahren, haben den Vorteil einer hohen technischen und wirtschaftlichen Effizienz. Außerdem ist nur ein geringer Bauaufwand erforderlich. Zudem ergeben sich Vorteile hinsichtlich der Betriebssicherheit bei der Führung und Stapelbildung von Warenlagen. In den aufeinander gestellten Stülpbehältern können die Warenlagen außerdem in einem rundum geschlossenen Aufnahmeraum gegen Umwelteinflüsse geschützt untergebracht werden. Dies ist insbesondere unter Hygienegesichtspunkten günstig.

Die beanspruchte Stapeltechnik hat den weiteren Vorteil, dass die losen Stülpbehälter einerseits zur schützenden Aufnahme einer Warenlage und andererseits für deren Schiebetransport eingesetzt werden können. Während der Transportbewegung ist die Warenlage sicher gehalten und seitlich geführt. Die Warenlage kann außerdem komplett mit dem Stülpbehälter gegriffen und geführt werden. Aufwändige Einzelgreifer wie bisher beim Palettieren von Flaschen üblich, sind entbehrlich.

Die Stülpbehälter können eine einfache und kostengünstige Bauform haben. Sie können auch aus einem leichtgewichtigen Material, insbesondere Kunststoff, bestehen. Zudem sind die Stabilitätsanforderungen an die Stülpbehälter vergleichweise gering, was sich ebenfalls in einer Material- und Kostenersparnis niederschlägt.

Die beanspruchte Stapeltechnik ermöglicht ein Auf- und Abstapeln von Stülpbehältern und Warenlagen. Hierbei ist auch ein Behälterkreislauf innerhalb eines Behälterstapels und der Stapeleinrichtung möglich. Die im Behälterstapel zwischen den Stülpbehältern bestehenden Innen- bzw. Aufnahmeräume können dabei mit Warenlagen befüllt oder entleert werden.

Die Stapeltechnik kann mit besonderem Vorteil Bestandteil einer Speichereinrichtung sein, die z.B. einen Pufferspeicher in Produktions- und Behandlungsanlagen für Flaschen oder andere Waren bieten kann. Für Flaschen, insbesondere leichtgewichtige Kunststoffflaschen, bestehen besondere Vorteile wegen deren Empfindlichkeit gegen Stöße und Transportschäden und wegen ihrer begrenzten Standfestigkeit.

Das lagenweise Greifen und Transportieren von Warenlagen, insbesondere aus Flaschen, hat außerdem Vorteile für den Handhabungs- und Orientierungsaufwand. Derartige Flaschen oder andere Behälter haben bisweilen eine spezielle und nicht symmetrische Formgebung und werden z.B. von einer Blasmaschine oder einer anderen Produktions- oder Entpackungseinrichtung mit einer besonderen Ausrichtung in Einzelreihen oder in einer Lage zugeführt. Diese Ausrichtung kann dank der beanspruchten Stapeltechnik mit Sicherheit beibehalten werden. Insbesondere können die Waren lageweise zum Aufstapeln abgeholt und zum Entstapeln wieder in gleicher Lageorientierung abgegeben werden. Der Sicherheits- und Kontrollaufwand für die Beibehaltung der Warenorientierung beim Stapeln ist dadurch minimal.

In den Unteransprüchen sind weitere vorteilhafte Ausgestaltungen der Erfindung angegeben.

Eine weitere Ausgestaltung betrifft außerdem einen stapelfähigen Behälter für eine Warenlage, der als Stülpbehälter ausgebildet ist und Seitenwände sowie eine Behälteröffnung an der einen Stirnseite und einen Behälterboden an der gegenüber liegenden Stirnseite aufweist, wobei der Behälterboden an der Außenseite eine im wesentlichen ebene Wandung aufweist, die als gleitgünstige Standfläche zum Aufschieben und Stützen einer Warenlage ausgebildet ist. Der Stülpbehälter kann eine Führungseinrichtung für die Seitenführung einer aufgenommenen Warenlage aufweisen.

Eine weitere Ausgestaltung betrifft ferner einen Behälterstapel, der mehrere aufeinander gestapelte, kistenartige Stülpbehälter in jeweils umgedrehter Stapellage mit nach unten gerichteter Behälteröffnung und nach oben gerichtetem Behälterboden aufweist.

Im Behälterstapel sind die Stülpbehälter aufeinander abgestützt und bevorzugt formschlüssig aneinander geführt. Benachbarte Stülpbehälter bilden im Behälterstapel jeweils einen geschlossenen Aufnahmeraum für eine Warenlage.

Die Erfindung ist in den Zeichnungen beispielhaft und schematisch dargestellt. Im Einzelnen zeigen:
- Figur 1 bis 4:: einen Ablauf beim Greifen und Stapeln einer Warenlage mit Stülpbehältern in verschiedenen Teilschritten,
- Figur 5 bis 7:: eine Stapeleinrichtung in verschiedenen Betriebsstellungen,
- Figur 8 und 9:: Varianten der Stapeleinrichtung von Figur 5 -7 und
- Figur 10:: eine abgebrochene Darstellung eines Stülpbehälters mit einer angebauten Führungseinrichtung.

Die Erfindung betrifft ein Stapelverfahren für Warenlagen (2).

Die Warenlage (2) kann von einer oder mehreren Waren gebildet werden. Die Waren können nebeneinander und ggf. auch übereinander angeordnet sein. Die Waren bestehen in den gezeigten und bevorzugten Ausführungsbeispielen aus leeren oder gefüllten Flaschen oder anderen Behältern. Andere Warenformen können Pakete, Säcke oder dgl. sein.

In den gezeigten Ausführungsbeispielen stehen die Waren innerhalb der Warenlage (2) nebeneinander. Sie können dabei in einer regelmäßigen Matrix stehen, die von mehreren nebeneinander angeordneten und gleich ausgerichteten Warenreihen gebildet wird. In einer anderen Ausführungsform ist auch ein Reihenversatz und eine Vernestung der einzelnen Waren in benachbarten Reihen möglich.

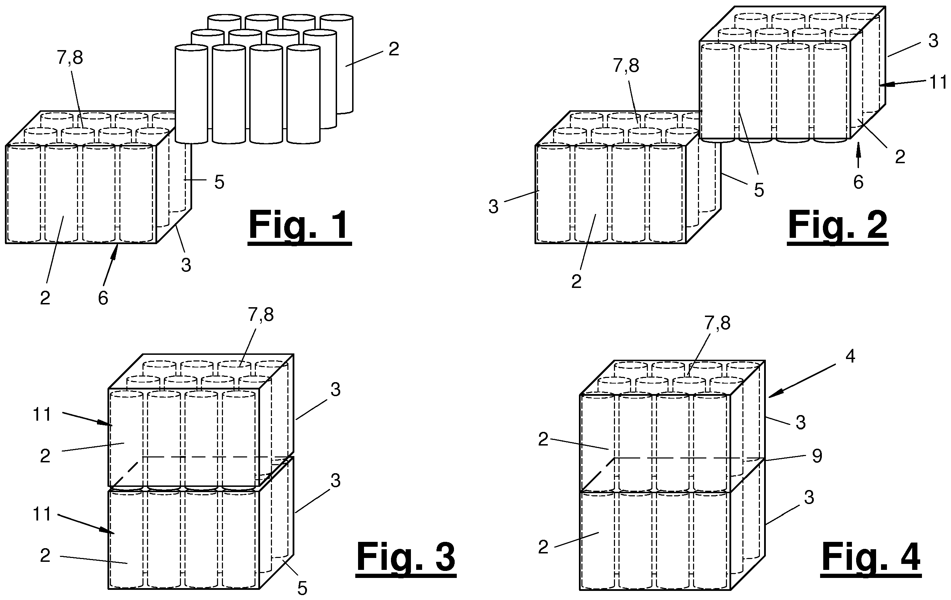

Figur 1 bis 4 verdeutlichen einen Stapelbildungsvorgang in mehreren Schritten. Die Stapelbildung erfolgt mittels Stülpbehältern (3), die Seitenwände (5), eine nach unten gerichtete stirnseitige Behälteröffnung (6) und einen nach oben gerichteten Behälterboden (7) an der anderen gegenüber liegenden Stirnseite aufweisen. Die Stülpbehälter (3) können die Form von umgedrehten Kisten oder Trays haben. Sie können mit ihrer unteren Behälteröffnung (6) über eine Warenlage (2) gestülpt werden. Hierdurch nehmen sie die Warenlage (2) in ihrem Innenraum (11) auf, wobei die Warenlage (2) anderweitig von unten her abgestützt ist.

Der Stülpbehälter (3) kann z.B. eine kubische Form haben und ein beliebiges Format besitzen, z.B. entsprechend einer Euro-Palette. Er kann aus einem beliebigen Material, insbesondere Kunststoff, Metall oder Holz oder auch aus Verbundmaterialien bestehen. Das Format des Innenraums (11) ist vorzugsweise an das Warenlagenformat in Größe und Form angepasst und ist geringfügig größer.

Die Seitenwände (5) umgeben in der Stülpstellung die Warenlage (2) seitlich. Sie umschließen sie dabei bevorzugt an allen Seiten und bieten dadurch eine Seitenführung für die Warenlage (2). In den gezeigten Ausführungsbeispielen sind die vier Seitenwände starr miteinander und bevorzugt auch mit dem Behälterboden (7) verbunden, wobei sie eine Art Rahmen für die Warenlage (2) bilden.

In einer anderen Ausführungsform kann mindestens eine Seitenwand (5) beweglich ausgebildet sein. Dies kann eine Schwenkbeweglichkeit in der Art einer Türe sein. In einer weiteren Abwandlung kann eine Seitenwand (5) auch entfallen, sodass die anderen Seitenwände eine Gabel zum seitlichen Umfassen einer Warenlage (2) bilden. In weiterer Abwandlung ist statt des rechteckigen Grundrisses auch eine beliebige andere Grundrissform möglich.

In den gezeigten Ausführungsbeispielen haben die Seitenwände (5) eine ebene Form und sind massiv ausgebildet. In einer anderen Variante können sie Unterbrechungen, z.B. eine Lochung, ein Gitter oder dgl. aufweisen. Sie können auch von einzelnen beabstandeten Streben, z.B. in Verbindung mit Eckpfosten, gebildet werden. Daneben sind andere geeignete Wandgestaltungen möglich. In den gezeigten Ausführungsbeispielen sind die Seitenwände starr und können sich nicht oder nur unwesentlich verformen. In anderen Ausführungen können sie eine größere Flexibilität haben.

Die Höhe der Seitenwände (5) ist vorzugsweise mindestens gleich oder größer als die Höhe der Warenlage (2). Die Stülpbehälter (3) können dadurch eine Warenlage (11) vollständig in ihrem von den Seitenwänden (5) und dem Behälterboden (7) umschlossenen Innenraum (11) aufnehmen.

Der Behälterboden (7) hat eine Mehrfachfunktion. Er deckt einerseits die im Innenraum (11) aufgenommene Warenlage (2) nach oben ab. Andererseits bildet der Stützboden (7) mit seiner Außenseite eine Standfläche (8) für die nächsthöhere Warenlage (2) im nächsthöheren Stülpbehälter (3).

Der Stützboden (7) kann eine geschlossene und stabile Wandung aufweisen. Er kann alternativ Durchbrechungen haben, wobei er z.B. als Gitterboden oder Lochboden ausgebildet ist. Er kann eine weitgehend ebene Außenseite zur Bildung der Standfläche (8) aufweisen. Die Standfläche (8) kann zwar im Querschnitt eine profilierte Form mit Bergen und Tälern aufweisen, wobei die gegenseitigen Abstände aber so klein sind, dass für die Warenlage (2) und für die darin ggf. enthaltenen Einzelwaren sich eine hinreichend stabile und tragfähige Standfläche ergibt, die auch ein Verschieben der Warenlage (2) und ihrer ggf. enthaltenen Einzelwaren entlang der Standfläche (8) ermöglicht.

Figur 1 zeigt eine erste untere Warenlage (2) in einem Stülpbehälter (3) und eine mit geringem Abstand darüber angeordnete und bereit gestellte zweite Warenlage (2). Gemäß Figur 2 wird über diese zweite Warenlage (2) der Stülpbehälter (3) gesetzt bzw. von oben übergestülpt. Der lose Stülpbehälter (3) wird dabei in einer Schwebeposition gehalten, wobei der untere öffnungsseitige Rand seiner Seitenwände (5) oberhalb der Unterseite der Warenlage (2) endet.

Gemäß Figur 2 und 3 wird der obere Stülpbehälter (3) dann seitlich, insbesondere horizontal verschoben, wobei er die Warenlage (2) mitnimmt, über den unteren Stülpbehälter (3) schiebt und auf dessen Stützboden (7) abstellt. Hierbei wird die obere Warenlage (2) von unten her mit einem nicht dargestellten Stützboden abgestützt, auf dem die Warenlage (2) bei dem seitlichen Verschieben gleitend oder rollend rutschen kann. Am Ende des seitlichen Schiebevorgangs gemäß Figur 3 schwebt der obere Stülpbehälter (3) noch mit einem Abstand über dem unteren Stülpbehälter (3). Beim letzten Schritt gemäß Figur 4 wird der obere Stülpbehälter (3) abgesenkt und auf den unteren Stülpbehälter (3) abgesetzt. Hierbei kommen seine Seitenwände (5) mit dem Behälterboden (7) des unteren Stülpbehälters (3) in Kontakt und stützen sich hierauf ab. In dieser Stellung wird der Innen- oder Aufnahmeraum (11) mit der Warenlage (2) an allen Seiten umlaufend geschlossen.

Um die gegenseitige Lage der aufeinander getürmten Stülpbehälter (3) im Behälterstapel (4) zu sichern, kann eine gegenseitige Verrastung (9) der Stülpbehälter (3) im Kontaktbereich vorhanden sein. Die Verrastung (9) kann eine gegenseitige formschlüssige Führung der Stülpbehälter (3) im Stapel bieten. Sie kann hierfür in beliebig geeigneter Weise ausgebildet sein. Beispielsweise hat der Behälterboden (7) an seiner Außenseite eine oder mehrere lokale oder ggf. umlaufende stufenartige Vertiefungen, die den öffnungseitigen Rand der Seitenwände (5) des oberen Stülpbehälters (3) formschlüssig aufnehmen, zentrieren und seitlich gegen Verrutschen sichern. In einer anderen Variante können die Seitenwandränder ebenfalls eine stufenförmige Ausbildung haben. Daneben sind beliebige andere Varianten, insbesondere auch ineinander greifende Zapfen bzw. Rippen und entsprechende Aufnahmeöffnungen möglich.

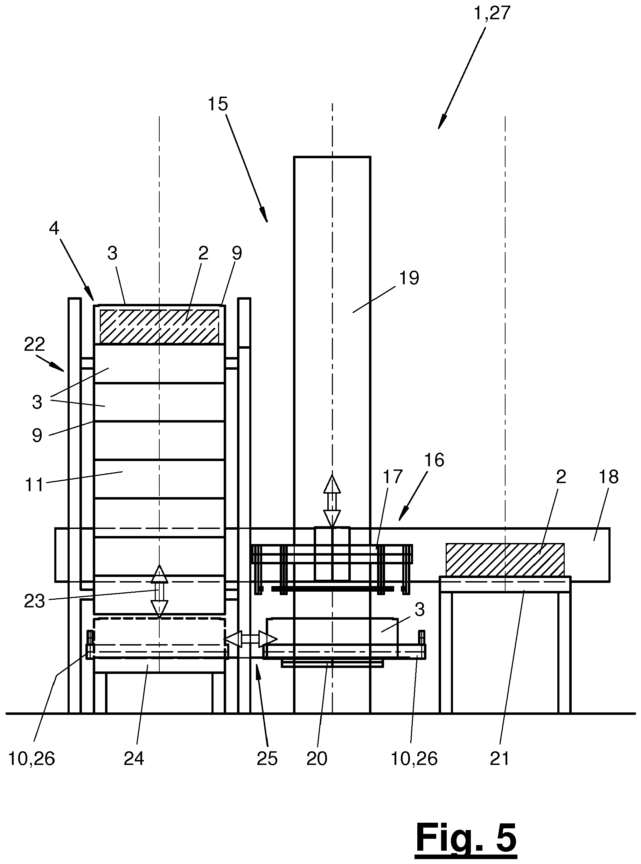

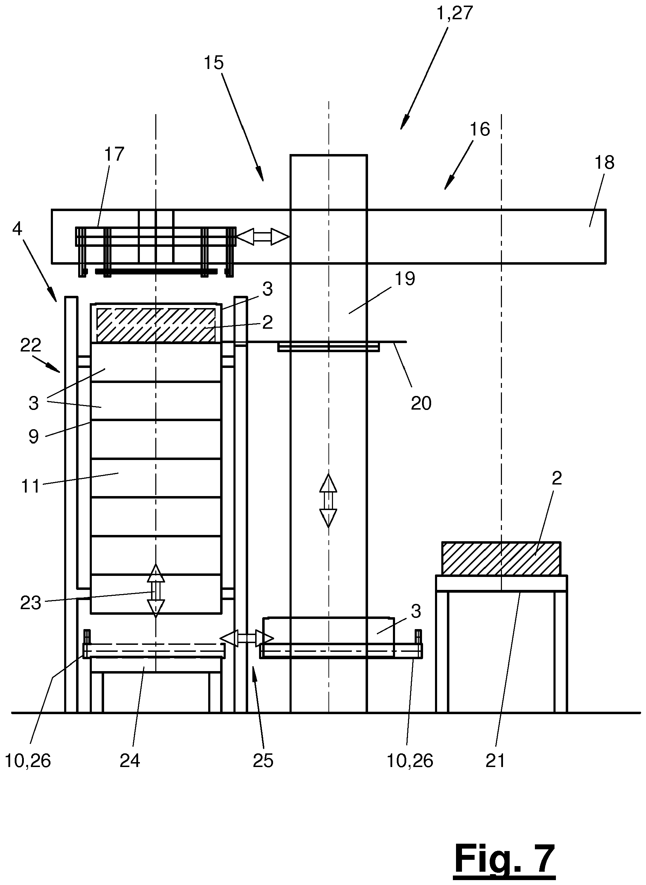

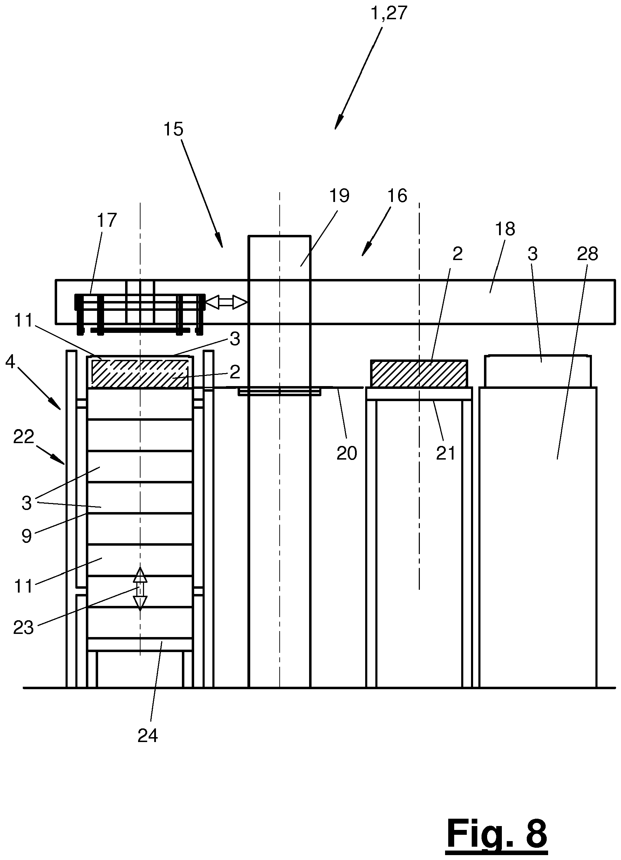

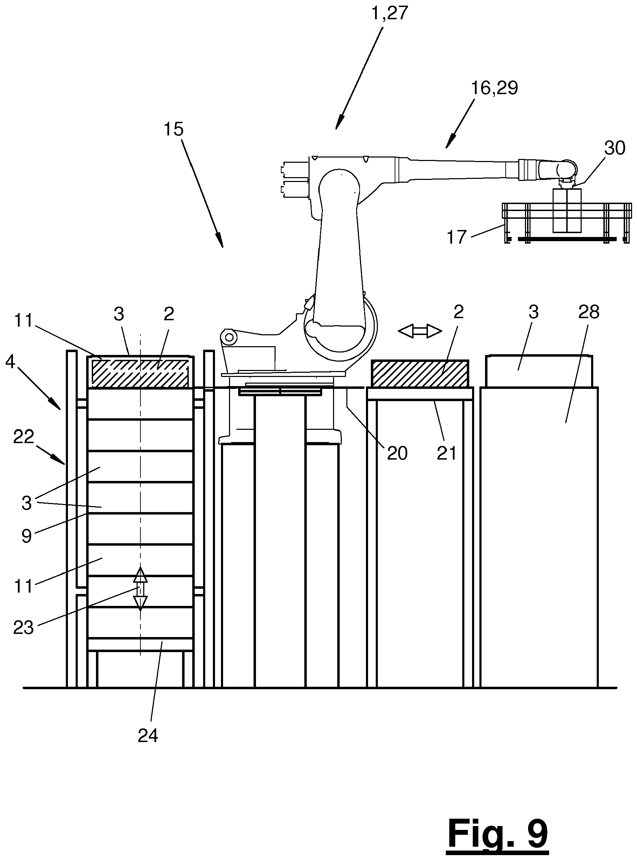

Figur 5 bis 7 zeigen eine erste Ausführungsform einer Stapeleinrichtung (1), die zum Aufschichten mehrerer Stülpbehälter (3) unter Bildung eines Behälterstapels (4) dient. In Figur 8 und 9 sind zwei Varianten der Stapeleinrichtung (1) dargestellt.

Das besagte Stapeln ist als Generalbegriff zu verstehen und kann sowohl das Aufstapeln, wie auch das Entstapeln beinhalten. Ferner fällt hierunter auch der nachfolgend beschriebene Behälterkreislauf sowie das Aufstapeln und Entstapeln von Warenlagen (2).

Die gezeigte Stapeleinrichtung (1) weist in den verschiedenen Varianten jeweils eine Handhabungseinrichtung (15) zum Bewegen und Stapeln der losen und nach unten offenen Stülpbehälter (3) auf. Die Stülpbehälter (3) können dabei in der vorbeschriebenen Weise in ihrem Innenraum (11) eine Warenlage (2) aufnehmen und mit ihrem nach oben weisenden Behälterboden (7) die Standfläche (8) für die nächste Warenlage (2) bilden. Beim Aufstapeln und Abstapeln von Stülpbehältern (3) können somit auch die betreffenden Warenlagen (2) aufgestapelt und entstapelt werden. Andererseits ist es auch möglich, einen Behälterstapel (4) aus leeren Stülpbehältern (3) zu bilden. Im Behälterstapel (4) werden die Stülpbehälter (3) aufeinander gestellt und stützen sich aufeinander ab.

Der in Figur 5 bis 7 gezeigte Behälterstapel (4) ist turmartig ausgebildet und beinhaltet mehrere übereinander aufgeschichtete Stülpbehälter (3), die ggf. miteinander verrastet (9) sind. Die Standfläche für die unterste Warenlage (2) im Stapel (4) kann von einem stationären oder mobilen Stapelboden (10) gebildet werden. Dies kann im einfachsten Fall ein leerer Stülpbehälter (3) sein. Alternativ kann dies ein spezieller und in der Höhe verkürzter Stützbehälter, eine Palette oder dergleichen sein. Der Stapelboden (10) kann auch von einer nachfolgend erläuterten Entnahmeeinrichtung (25) gebildet werden, insbesondere wenn die Stülpbehälter (3) in einem Kreislauf über den Stapel zirkulieren sollen.

Der Behälterstapel (4) kann stationär an der Stapeleinrichtung (1) angeordnet sein. Alternativ kann er beweglich und insbesondere verfahrbar sein, wobei der Stapelboden (10) hierfür entsprechend ausgebildet ist. Ein solcher beweglicher Behälterstapel (4) kann ein Gebinde für die eingeschlossenen Warenlagen (2) bilden und deren geschützten Transport ermöglichen. Andererseits kann ein Stapel (4) auch aus leeren Stülpbehältern (3) gebildet werden, z.B. zum Zweck einer Bevorratung oder eines Ein- und Ausschleusens von Stülpbehältern (3) in einem größeren und stationsübergreifenden Behälterkreislauf.

Die Stapeleinrichtung (1), insbesondere die Handhabungseinrichtung (15), weist in der Ausführungsform von Figur 5 bis 7 einen in der Höhe und seitlich beweglichen Schieber (16) für das Handhaben und Bewegen von einem oder mehreren Stülpbehältern (3) und ggf. einer darin enthaltenen Warenlage (2) auf. Die Handhabungseinrichtung (15) weist ferner einen höhenverstellbaren Stützboden (20) für eine Warenlage (2) auf. Der Schieber (16) ist dazu vorgesehen und ausgebildet, einen losen Stülpbehälter (3) zu halten und über eine Warenlage (2) zu stülpen sowie anschließend den Stülpbehälter (3) und die Warenlage (2) gemeinsam zu verschieben, insbesondere auf den erwähnten Stützboden (20).

Der Schieber (16) kann für diese Funktionen in beliebig geeigneter Weise konstruktiv ausgebildet sein. In der gezeigten und bevorzugten Ausführungsform weist er einen steuerbaren Greifer (17) auf, der einen Stülpbehälter (3) greifen und loslassen kann und der zu diesen Zweck bewegliche und steuerbare Greiffinger oder dgl. andere Greifelemente aufweist. Diese fassen z.B. einen Stülpbehälter (3) seitlich. Ansonsten kann der steuerbare Greifer (17) eine beliebige andere konstruktive Gestaltung zum definierten Fassen und Führen eines Stülpbehälters (3) haben.

Der Schieber (16) weist ferner eine horizontale Schieberführung oder Greiferführung (18) für die besagte Schiebebewegung sowie eine Hubeinrichtung (19) für die erwähnte bevorzugt vertikale Hebe- und Senkbewegung auf. In der gezeigten Ausführungsform ist der Greifer (18) an der Schieberführung (18) seitlich verfahrbar gelagert und wird dabei mit einem entsprechenden steuerbaren Antrieb bewegt. Die Schieber- oder Greiferführung (18) ist ihrerseits mit der Hubeinrichtung (19) verbunden, die hierfür z.B. eine aufrechte Säule mit einer entsprechenden Schlittenführung und einem steuerbaren Hubantrieb aufweist. Alternativ sind andere konstruktive Ausführungen möglich.

In Abwandlung der gezeigten Ausführungsform kann die Handhabungseinrichtung (15) Mehrfachanordnungen von Schiebern (16), Greifern (17) und Führungs- und Antriebseinrichtungen (18,19) aufweisen. Ferner kann die Kinematik eine andere sein. In den gezeigten Ausführungen ist die Greiferführung (18) als horizontaler Tragarm ausgebildet und führt den Greifer (18) in einer Linearbewegung. In einer anderen Variante kann der Greifer (18) für das seitliche Verschieben der Warenlage (2) eine Schwenkbewegung ausführen, wobei die Greiferführung (18) entsprechend als Schwenkarm, Lenkergetriebe oder dgl. ausgebildet ist.

Die Stapeleinrichtung (1) weist eine Bereitstellung (21) für eine oder mehrere Warenlagen (2) auf. Diese kann z.B. als Tisch oder als Förderer, insbesondere als Bandförderer, ausgebildet sein. Die Bereitstellung (21) kann auch in eine übergeordnete Fördertechnik eingebunden sein, wobei z.B. Waren, insbesondere Flaschen, von einem Flaschenerzeuger, insbesondere einer Blasmaschine, hergestellt und in Einzelreihen abgeben werden, wobei die Reihen anschließend zur Bildung einer mehrreihigen Lage in geeigneter Weise zusammengeführt und zur Bereitstellung (21) transportiert werden. Auf der Bereitstellung (21) wird die Warenlage (2) freistehend zur Übernahme in einen Stülpbehälter (3) präsentiert.

Für den seitlich und gegebenenfalls mit Abstand von der Bereitstellung (21) angeordneten Behälterstapel (4) ist eine Stapelführung (22) vorgesehen. Diese weist eine untere Stapelstütze (24) auf, die z.B. als stationärer oder beweglicher Sockel ausgebildet ist. Die Stapelstütze (24) kann gegebenenfalls auch den vorerwähnten Stapelboden (10) bilden.

Die Stapelführung (22) kann ferner einen Stapellifter (23) aufweisen, mit dem der gesamte oder ein Teil des Behälterstapels (4) gehoben und gesenkt werden kann. Der Stapellifter (23) greift z.B. den untersten oder zweituntersten Stülpbehälter (3) im Stapel (4) und hebt bzw. senkt diesen zusammen mit allen darüber aufgetürmten Stülpbehältern (3) und ggf. darin enthaltenen Warenlagen (2).

Wie Figur 5 bis 7 in verschiedenen Schritten darstellen, wird zunächst eine Warenlage (2) an der Bereitstellung (21) platziert. Der Schieber (16) und sein Greifer (17) greifen einen losen Stülpbehälter (3) seitlich und/oder von oben. Der Stülpbehälter (3) kann in beliebig geeigneter Weise in den Zugriffsbereich des Schiebers (16) bzw. Greifers (17) und insbesondere in den Freiraum zwischen Bereitstellung (21) und Stapelführung (22) eingebracht werden. Dies kann z.B. mittels der nachfolgend erläuterten Entnahmeeinrichtung (25) aus dem Behälterstapel (4) erfolgen.

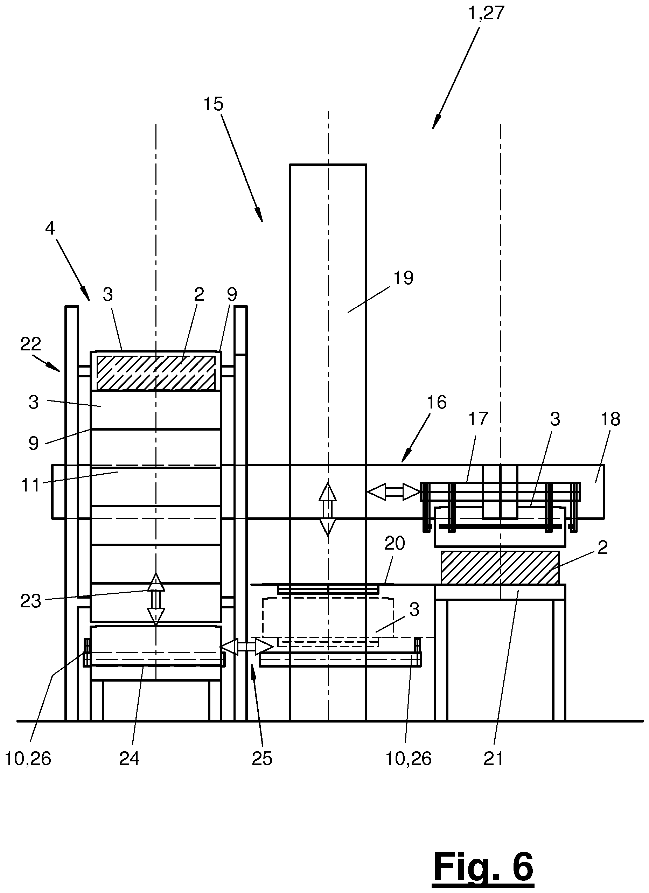

Der Schieber (16) bzw. Greifer (17) nimmt gemäß Figur 6 den bereit gestellten Stülpbehälter (3) aus der gestrichelt gezeichneten Position auf, platziert ihn über der Warenlage (2) und senkt ihn dann ab. Zu diesem Zeitpunkt ist auch der ebenfalls höhenverstellbare und bevorzugt an der Hubeinrichtung (19) angeordnete Stützboden (20) in eine entsprechende Höhenlage gegenüber der Bereitstellung (21) gebracht, wobei seine Oberseite mit der Stützfläche der Bereitstellung (21) fluchtet. Aus dieser in Figur 6 gezeigten Position schiebt anschließend der Schieber (16) bzw. Greifer (17) den Stülpbehälter (3) mit der Warenlage (2) auf den Stützboden (20) und positioniert dort beide. Der Stülpbehälter (3) wird dabei schwebend und mit Abstand vom Stützboden (20) gehalten.

Anschließend bewegen sich der Schieber (16) bzw. Greifer (17) und der Stützboden (20) gemeinsam und synchron mit der Hubeinrichtung (19) nach oben bis auf Höhe des obersten Stülpbehälters (3) im Stapel (4) und dessen Behälterboden (7) bzw. Standfläche (8). Der Stützboden (20) schließt hieran fluchtend an, so dass der Schieber (16) bzw. Greifer (17) den Stülpboden (3) mit der Warenlage (2) auf die besagte Standfläche (8) schieben kann. Anschließend lässt der Schieber (16) bzw. Greifer (17) den Stülpbehälter (3) los und kehrt zusammen mit dem Stützboden (20) in die in Figur 5 gezeigte Ausgangslage zurück. Der beschriebene Zyklus beginnt dann von Neuem.

Auf diese Weise kann ein Behälterstapel (4) nach und nach aufgebaut werden, wobei seine Höhe wächst. Die leeren Stülpbehälter (3) werden dabei in geeigneter Weise von Außen zugeführt.

Figur 5 bis 7 verdeutlichen eine Ausführung, in der die Stülpbehälter (3) an der Stapeleinrichtung (1) zirkulieren, wobei ihre Zahl und die Höhe des Behälterstapels (4) gleich bleiben. Bei dieser Zirkulation können z.B. die im Stapel (4) befindlichen Stülpbehälter (3) nach und nach mit Warenlagen (2) befüllt werden.

Zu diesem Zweck weist die Handhabungseinrichtung (15) bzw. die Stapelführung (22) eine Entnahmeeinrichtung (25) auf, die z.B. im bodennahen Bereich angeordnet ist. Diese kann aus dem Behälterstapel (4) den z.B. untersten Stülpbehälter (3) entnehmen und für den Schieber (16) bzw. Greifer (17) bereitstellen. Die Entnahmeeinrichtung (25) weist einen Greifer (26) auf, der den besagten untersten Stülpbehälter (3) aus dem Stapel (4) entnehmen und in freizugänglicher Position bereitstellen kann. Der Stapellifter (23) hebt hierfür gemäß Figur 5 den oberen Teil des Behälterstapels (4) an, so dass der gestrichelt dargestellte unterste Stülpbehälter (3) freigestellt wird und in die mit durchgezogenen Strichen gezeichnete Bereitstellungsposition gebracht werden kann. Der Greifer (26) kann hierbei eine Schiebe- oder Schwenkbewegung oder eine sonstige geeignete seitliche Bewegung ausführen. Der Greifer (26) kann hierbei einen Boden aufweisen, der die Funktion des Stapelbodens (10) übernehmen kann.

Nach der Behälterentnahme wird der restliche Stapel (4) vom Stapellifter (23) wieder abgesenkt, so dass in der vorbeschriebenen Weise der Stülpbehälter (3) mit der Warenlage (2) wieder oben in den Stapel (4) eingebracht werden kann.

Der Greifer (26) kann mit beweglichen und steuerbaren Greiffingern ausgestattet sein. In einer vereinfachten Variante kann der Greifer (26) als Pusher ausgebildet sein und lediglich mit einem Stößel oder dgl. den Stülpbehälter (3) seitlich verschieben. Ferner kann der höhenverstellbare Stützboden (20) den Stülpbehälter (3) temporär aufnehmen und zur Übernahme für den Schieber (16) bereit halten. In weiterer Abwandlung kann die Entnahmeeinrichtung (25) an anderer Stelle, insbesondere oben, angeordnet sein. Sie kann außerdem in anderer Weise konstruktiv und funktional ausgebildet sein.

Figur 8 zeigt eine erste Variante des Ausführungsbeispiels von Figur 5 bis 7. Die Bereitstellung (21) für die Warenlagen (2) ist in diesem Fall als Hocheinlauf ausgebildet und befindet sich in einer Höhe, die dem Niveau der obersten Warenlage (2) im Behälterstapel (4) entsprechen kann. Der Stützboden (20) braucht in diesem Fall keine Höhenbewegungen auszuführen. Er kann stationär angeordnet sein. Er kann auch von der Hubeinrichtung (19) entkoppelt sein.

Die Handhabungseinrichtung (15) kann wie im ersten Ausführungsbeispiel einen Schieber (16) mit einem in der Höhe und seitlich verfahrbaren (18,19) Greifer (17) aufweisen. Die Hubbewegungen können sich dabei auf das Heben und Senken des Stülpbehälters (3) zur Übernahme und zum Schiebetransport der Warenlage (2) sowie zum Absetzen des Stülpbehälters (3) im Behälterstapel (4) beschränken und reduzieren.

Bei einer solchen Ausführungsform können die zum Auf- und Entstapeln erforderlichen Hubbewegungen mit dem Behälterstapel (4) durch den Stapellifter (23) und/oder durch eine höhenverstellbare untere Stapelstütze (24) ausgeführt werden.

Figur 8 zeigt außerdem eine weitere Abwandlung gegenüber den Ausführungsbeispiel von Figur 5 bis 8 betreffend die Zuführung von Stülpbehältern (3). Bei der gezeigten Variante ist eine eigene Bereitstellung (28) oder Zuführung bzw. Abführung für Stülpbehälter (3) vorgesehen. Hier können leere Stülpbehälter (3) zum Aufstapeln bereit gestellt oder beim Entstapeln abgeführt werden. Sie können von einem externen Magazin kommen.

Die Bereitstellung (28) kann an einer beliebig geeigneten Stelle angeordnet sein, z.B. neben der Bereitstellung (21) für die Warenlagen (2). Die Handhabungseinrichtung (15) ist entsprechend angepasst und kann die Bereitstellung (28) erreichen. Hierfür ist z.B. die Schieberführung (18) entsprechend verlängert.

Alternativ kann bei der Variante von Figur 8 mit dem Hocheinlauf für die Warenlagen (2) die vorbeschriebene Entnahmeeinrichtung (25) eingesetzt werden. Ferner kann der Stützboden (20) höhenverstellbar sein.

Figur 9 zeigt eine dritte Variante der Stapeleinrichtung (1) und der Handhabungseinrichtung (15). Der Schieber (16) der Handhabungseinrichtung (15) ist in diesem Fall als Industrieroboter (29) ausgebildet, der mit seinem Abtriebselement (30), z.B. einem drehbaren Abtriebsflansch einer Roboterhand, die Stülpbehälter (3) bewegt. Am Abtriebselement (30) kann wie in den vorbeschriebenen Ausführungsbeispielen ein steuerbarer Greifer (17) angeordnet sein. Der Industrieroboter (29) ist z.B. als Gelenkarmroboter ausgebildet und hat mehrere, insbesondere vier, fünf, sechs oder mehr angetriebene Roboterachsen. Der Industrieroboter (29) ist programmierbar und verfügt über eine Robotersteuerung (nicht dargestellt).

Der Industrieroboter (29) handhabt und bewegt den Stülpbehälter (3). Er führt mit einer seitlichen Bewegung des Stülpbehälters (3) den vorbeschriebenen Schiebetransport der Warenlage (2) durch. Außerdem kann er den Stülpbehälter (3) zum Greifen und Freigeben einer Warenlage (2) heben und senken. Der Industrieroboter (29) kann stationär oder beweglich, insbesondere ein- oder mehrachsig verfahrbar oder verschwenkbar, angeordnet sein. Er kann flurgebunden oder an einem Träger, insbesondere hängend an einer Wand/Decke oder auf einem Sockel, angeordnet sein.

Ansonsten kann die Stapeleinrichtung (1) gemäß der vorherigen Ausführungsbeispiele ausgebildet sein. Dies betrifft insbesondere die Varianten der Bereitstellung (21) und der evtl. vorhandenen Entnahmeeinrichtung (25).

Der Schieber (16) der Handhabungseinrichtung (15) in den Ausführungsbeispielen von Figur 5 bis 8 kann mit der Schieberführung (18) und der Hubeinrichtung (19) einen Linearroboter mit translatorischen Roboterachsen darstellen. Der Gelenkarmroboter (29) von Figur 9 hat rotatorische Roboterachsen. In einer anderen und nicht dargestellten Variante kann der Schieber (16) in einer robotischen Ausführung eine beliebige Zahl und Kombination von rotatorischen und/oder translatorischen Roboterachsen aufweisen. Die besagten Roboterachsen bestehen in den gezeigten Ausführungsbeispielen jeweils aus einem Schwenk- oder Schiebelager zwischen benachbarten Robotergliedern und einem steuer- und regelbaren Achsantrieb für das bewegte Roboterglied.

Abwandlungen der gezeigten und beschriebenen Ausführungsformen sind in verschiedener Weise möglich. Der vorbeschriebene Aufstapelvorgang kann auch für ein Entstapeln umgekehrt werden. Hierbei nimmt die Handhabungseinrichtung (15) den obersten Stülpbehälter (3) mit der Warenlage (2) aus dem Stapel (4) ab, schiebt ihn auf den Stützboden (20) und bringt ihn anschließend zur Bereitstellung (21), wo die Warenlage (2) übergeschoben und durch anschließendes Abheben des Stülpbehälters (3) freigegeben werden kann. Der Stülpbehälter (3) wird auch beim Entstapeln für den Schiebetransport der Warenlage (2) benutzt.

Für das Überstülpen der Stülpbehälter (3) über die Warenlage (2) gibt es kinematische Varianten. In den vorbeschriebenen Ausführungsbeispielen kann der Stülpbehälter (3) von der Handhabungseinrichtung (15) relativ zur Warenlage (2) gehoben und gesenkt werden. Die Warenlage kann dabei ruhen oder in Bewegung sein. Die Handhabungseinrichtung (15) kann einer Vorschubbewegung der Warenlage (2) folgen und diese mit dem Stülpbehälter (3) "on the fly" greifen oder beim Entstapeln frei geben.

Alternativ kann die Hebe- und Senkbewegung von der Warenlage (2) relativ zum bereit gehaltenen Stülpbehälter (3) ausgeführt werden. Die Handhabungseinrichtung (15) hat hierfür z.B. eine Hubeinrichtung an der Bereitstellung (21). Im Bereich des Behälterstapels (4) kann der Stapellifter (23) und/oder eine höhenverstellbare Stapelstütze (24) die besagte Hubbewegung der Warenlage (2) bewirken. In einer weiteren Variante können Stülpbehälter (3) und Warenlage (2) relativ zueinander bewegt werden. Die Hebe- und Senkbewegung verläuft bevorzugt in einer linearen Bahn. Alternativ kann die Bahn zumindest bereichsweise gebogen sein.

Ferner ist es möglich, die Stapelreihenfolge zu verändern. Im beschriebenen Ausführungsbeispiel erfolgt das Auf- und Entstapeln an der Oberseite des Behälterstapels (4). Es kann alternativ an der Unterseite erfolgen. Es kann auch an entgegen gesetzten Enden alternierend auf- und abgestapelt werden. Ferner kann statt der beschriebenen Behälterzirkulation über einen einzelnen Stapel (4) ein Umstapeln zwischen mehreren parallelen leeren und gefüllten Behälterstapeln erfolgen.

Die Stapeleinrichtung (1) kann Bestandteil einer Speichereinrichtung (27) sein, die z.B. einen Pufferspeicher für Flaschen oder andere Waren in einer Produktions- oder Behandlungsanlage, z.B. einer Füllanlage, bildet. Die Bereitstellung (21) ist hierfür z.B. an eine Förderlinie dieser Anlage angeschlossen.

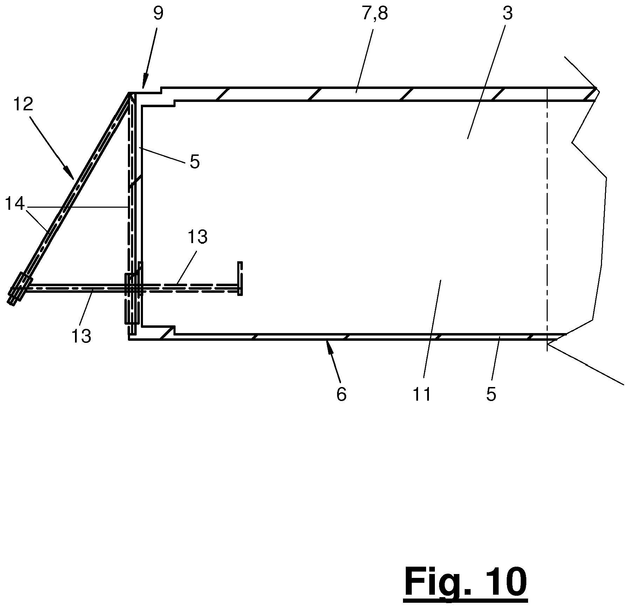

Figur 10 zeigt eine Abwandlung des Stülpbehälters (3) mit der Anordnung einer Führungseinrichtung (12), einem sog. Spacer, für die aufgenommene Warenlage (2). Diese kann mit dem Spacer (12) zusammengeschoben, gehalten und in ihrer Lage, insbesondere gegen Umfallen, gesichert werden. Dies ist von Vorteil, wenn die Grundfläche der Warenlage (2) kleiner als die Grundfläche des Innenraums (11) ist. Die Führungseinrichtung (12) weist ein im Innenraum (11) wirkendes Führungselement (13) und einen Aktor (14) für dessen Betätigung auf.

Im gezeigten Ausführungsbeispiel ist das Führungselement (13) als Anschlagleiste im Innenraum (11) ausgebildet, die durch eine Öffnung in der Seitenwand (5) ragt und am äußeren Ende mit einem als Schwenkklappe ausgebildeten Aktor (14) verbunden ist. Die Klappe (14) ist hängend und schwenkbar gelagert und kann gegebenenfalls mit einem Zusatzgewicht versehen sein. Sie schwenkt durch ihr Eigengewicht nach unten und schiebt dabei die Anschlagleiste (13) in den Innenraum (11) und gegen die dortige Warenlage (2). Die Einschub- und Anschlagstellung ist gestrichelt dargestellt. Die durchgezogen dargestellte Öffnungsstellung kann durch eine geeignete Vorrichtung, z.B. einen Öffnungsarm am Schieber (16) bzw. Greifer (17) hergestellt werden. Daneben sind beliebige andere Ausgestaltungen der Führungseinrichtung (12) möglich. In der einfachsten Ausführungsform kann diese auch entfallen. Abwandlungen der gezeigten und beschriebenen Ausführungsformen sind in verschiedener Weise möglich. Dies betrifft eine Mehrfachanordnung der beschriebenen Komponenten der Stapeleinrichtung (1), insbesondere der Handhabungseinrichtung (15).

### BEZUGSZEICHENLISTE

- 1: Stapeleinrichtung, Palettierer
- 2: Warenlage
- 3: Stülpbehälter
- 4: Behälterstapel
- 5: Seitenwand
- 6: Öffnung
- 7: Behälterboden
- 8: Standfläche
- 9: Verrastung
- 10: Stapelboden
- 11: Innenraum, Aufnahmeraum
- 12: Führungseinrichtung, Spacer
- 13: Führungselement
- 14: Aktor
- 15: Handhabungseinrichtung
- 16: Schieber
- 17: Greifer
- 18: Schieberführung, Greiferführung, Tragarm
- 19: Hubeinrichtung
- 20: Stützboden
- 21: Bereitstellung, Förderer
- 22: Stapelführung
- 23: Stapellifter
- 24: Stapelstütze
- 25: Entnahmeeinrichtung
- 26: Greifer
- 27: Speichereinrichtung, Pufferspeicher
- 28: Bereitstellung
- 29: Industrieroboter
- 30: Abtriebselement

## Patentansprüche

1. Verfahren zum Stapeln von Warenlagen (2) mit einer Stapeleinrichtung (1), **dadurch gekennzeichnet, dass** mit einer Handhabungseinrichtung (15) der Stapeleinrichtung (1) lose und nach unten offene Stülpbehälter (3) gehandhabt und seitlich verschoben sowie gestapelt werden, wobei die Stülpbehälter (3) in ihrem Innenraum (11) eine Warenlage (2) aufnehmen und bei ihrem Schiebetransport mitnehmen, und wobei die Stülpbehälter (3) mit ihrem nach oben weisenden Behälterboden (7) die Standfläche (8) für die nächste Warenlage (2) bilden.

2. Verfahren nach Anspruch 1, **dadurch gekennzeichnet, dass** die Stülpbehälter (3) im Behälterstapel (4) sich aufeinander abstützen.

3. Verfahren nach Anspruch 1 oder 2, **dadurch gekennzeichnet, dass** im Behälterstapel (4) Stülpbehälter (3) mit den aufgenommenen Warenlagen (2) oder leere Stülpbehälter (3) gestapelt werden.

4. Verfahren nach Anspruch 1, 2 oder 3, **dadurch gekennzeichnet, dass** die Warenlagen (2) im Behälterstapel (4) in einem rundum geschlossenen Aufnahmeraum untergebracht werden.

5. Verfahren nach einem der vorhergehenden Ansprüche, **dadurch gekennzeichnet, dass** ein Stülpbehälter (3) eine Warenlage (2) komplett greift und führt.

6. Verfahren nach einem der vorhergehenden Ansprüche, **dadurch gekennzeichnet, dass** die Stülpbehälter (3) innerhalb eines Behälterstapels (4) und der Stapeleinrichtung (1) in einem Behälterkreislauf geführt werden.

7. Verfahren nach einem der vorhergehenden Ansprüche, **dadurch gekennzeichnet, dass** mit der Stapeleinrichtung (1) Stülpbehälter (3) und Warenlagen (2) aufgestapelt und/oder entstapelt werden.

8. Verfahren nach einem der vorhergehenden Ansprüche, **dadurch gekennzeichnet, dass** der Stülpbehälter (3) und die Warenlage (2) zum Schiebetransport gemeinsam seitlich, insbesondere horizontal bewegt werden.

9. Verfahren nach einem der vorhergehenden Ansprüche, **dadurch gekennzeichnet, dass** zum Aufnehmen und Abgeben einer Warenlage (2) eine relative Hebe- und Senkbewegung zwischen Stülpbehälter (3) und Warenlage (2) ausgeführt wird.

10. Verfahren nach einem der vorhergehenden Ansprüche, **dadurch gekennzeichnet, dass** der Stülpbehälter (3) beim seitlichen Verschieben unter Mitnahme der Warenlage (2) in einer Schwebeposition gehalten wird, wobei der untere öffnungsseitige Rand seiner Seitenwände (5) oberhalb der Unterseite der Warenlage (2) endet.

11. Verfahren nach einem der vorhergehenden Ansprüche, **dadurch gekennzeichnet, dass** die Handhabungseinrichtung (15) einen mehrachsig gesteuert bewegbaren Schieber (16) aufweist, mit dem die Stülpbehälter (3) gehandhabt und bewegt werden.

12. Verfahren nach einem der vorhergehenden Ansprüche, **dadurch gekennzeichnet, dass** die Stülpbehälter (3) als umgedrehte Kisten oder Trays ausgebildet sind und Seitenwände (5) mit einer unten angeordneten Behälteröffnung (6) und einem oben angeordneten Behälterboden (7) aufweisen.

13. Verfahren nach einem der vorhergehenden Ansprüche, **dadurch gekennzeichnet, dass** die Stülpbehälter (3) eine Verrastung (9) zwischen dem Behälterboden (7) und dem öffnungsseitigen Rand von einer oder mehreren Seitenwänden (5) aufweisen.

14. Verfahren nach einem der vorhergehenden Ansprüche, **dadurch gekennzeichnet, dass** der Stülpbehälter (3) eine Führungseinrichtung (12) für die Seitenführung einer aufgenommenen Warenlage (2) aufweist.

## Claims

1. Method for stacking layers of articles (2) with a stacking device (1), **characterized in that** loose and downwardly open slip-on containers (3) are handled and laterally displaced and stacked by a handling device (15) of the stacking device (1), wherein the slip-on containers (3) receive a layer of articles (2) in their interior (11) and carry them along while they are being transported in a sliding manner, and wherein the slip-on containers (3) form the supporting surface (8) for the next layer of articles (2) by way of their upwardly pointing container bottom (7).

2. Method according to Claim 1, **characterized in that** the slip-on containers (3) are supported on one another in the container stack (4).

3. Method according to Claim 1 or 2, **characterized in that** slip-on containers (3) are stacked with the received layers of articles (2) or empty slip-on containers (3) in the container stack (4).

4. Method according to Claim 1, 2 or 3, **characterized in that** the layers of articles (2) are accommodated in the container stack (4) in a receiving space which is closed all around.

5. Method according to one of the preceding claims, **characterized in that** a slip-on container (3) completely grips and guides a layer of articles (2).

6. Method according to one of the preceding claims, **characterized in that** the slip-on containers (3) are guided within a container stack (4) and the stacking device (1) in a container circuit.

7. Method according to one of the preceding claims, **characterized in that** slip-on containers (3) and layers of articles (2) are stacked up and/or destacked by the stacking device (1).

8. Method according to one of the preceding claims, **characterized in that**, for sliding transport, the slip-on container (3) and the layer of articles (2) are together moved laterally, in particular horizontally.

9. Method according to one of the preceding claims, **characterized in that**, to receive and release a layer of articles (2), a relative lifting and lowering movement is performed between slip-on container (3) and layer of articles (2).

10. Method according to one of the preceding claims, **characterized in that**, during lateral displacement while carrying along the layer of articles (2), the slip-on container (3) is held in a floating position, wherein the lower opening-side edge of its side walls (5) ends above the lower side of the layer of articles (2).

11. Method according to one of the preceding claims, **characterized in that** the handling device (15) has a slide (16) which can be moved in a multiaxially controlled manner and by means of which the slip-on containers (3) are handled and moved.

12. Method according to one of the preceding claims, **characterized in that** the slip-on containers (3) are designed as inverted boxes or trays and have side walls (5) with a container opening (6) arranged at the bottom and a container bottom (7) arranged at the top.

13. Method according to one of the preceding claims, **characterized in that** the slip-on containers (3) have a latching means (9) between the container bottom (7) and the opening-side edge of one or more side walls (5).

14. Method according to one of the preceding claims, **characterized in that** the slip-on container (3) has a guide device (12) for the lateral guidance of a received layer of articles (2).

## Revendications

1. Procédé pour empiler des couches de produits (2) avec un dispositif d'empilement (1), **caractérisé en ce qu'**avec un dispositif de manipulation (15) du dispositif d'empilement (1), des récipients cloches (3) libres, ouverts vers le bas, sont manipulés, déplacés latéralement et empilés, les récipients cloches (3) recevant dans leur espace intérieur (11) une couche de produits (2) qu'ils emportent lors de leur transport par glissement, et les récipients cloches (3) formant avec leur fond de récipient (7) tourné vers le haut la surface d'appui (8) pour la couche de produits suivante (2).

2. Procédé selon la revendication 1, **caractérisé en ce que** les récipients cloches (3) s'appuient les uns sur les autres dans la pile de récipients (4).

3. Procédé selon la revendication 1 ou 2, **caractérisé en ce que** dans la pile de récipients (4) sont empilés des récipients cloches (3) avec les couches de produits reçues (2) ou des récipients cloches vides (3).

4. Procédé selon la revendication 1, 2 ou 3, **caractérisé en ce que** les couches de produits (2) sont placées dans la pile de récipients (4) dans un espace de réception fermé sur son pourtour.

5. Procédé selon l'une quelconque des revendications précédentes, **caractérisé en ce qu'**un récipient cloches (3) vient en prise complètement avec une couche de produits (2) et la guide.

6. Procédé selon l'une quelconque des revendications précédentes, **caractérisé en ce que** les récipients cloches (3) sont guidés à l'intérieur d'une pile de récipients (4) et du dispositif d'empilement (1) dans un circuit de récipients.

7. Procédé selon l'une quelconque des revendications précédentes, **caractérisé en ce qu'**au moyen du dispositif d'empilement (1), des récipients cloches (3) et des couches de produits (2) sont empilés et/ou désempilés.

8. Procédé selon l'une quelconque des revendications précédentes, **caractérisé en ce que** le récipient cloches (3) et la couche de produits (2) sont déplacés latéralement en commun, notamment horizontalement pour le transport par glissement.

9. Procédé selon l'une quelconque des revendications précédentes, **caractérisé en ce que** pour recevoir et déposer une couche de produits (2), il se produit un déplacement de levage et d'abaissement relatif entre le récipient cloche (3) et la couche de produits (2).

10. Procédé selon l'une quelconque des revendications précédentes, **caractérisé en ce que** le récipient cloche (3), lors du déplacement latéral en entraînant la couche de produits (2), est maintenu dans une position flottante, le bord inférieur côté ouverture de ses parois latérales (5) se terminant au-dessus du côté inférieur de la couche de produits (2).

11. Procédé selon l'une quelconque des revendications précédentes, **caractérisé en ce que** le dispositif de manipulation (15) présente un coulisseau (16) déplaçable de manière commandée suivant plusieurs axes, avec lequel les récipients cloches (3) sont manipulés et déplacés.

12. Procédé selon l'une quelconque des revendications précédentes, **caractérisé en ce que** les récipients cloches (3) sont réalisés sous forme de caisses ou de plateaux retournés et présentent des parois latérales (5) avec une ouverture de récipient (6) disposée en bas et un fond de récipient (7) disposé en haut.

13. Procédé selon l'une quelconque des revendications précédentes, **caractérisé en ce que** les récipients cloches (3) présentent un encliquetage (9) entre le fond de récipient (7) et le bord côté ouverture d'une ou plusieurs parois latérales (5).

14. Procédé selon l'une quelconque des revendications précédentes, **caractérisé en ce que** le récipient cloche (3) présente un dispositif de guidage (12) pour le guidage latéral d'une couche de produits reçue (2).
